# EUROPEAN PATENT SPECIFICATION

(11) **EP 1 652 250 B1**
(45) Date of publication and mention of the grant of the patent: **28.12.2011**
(21) Application number: 04761988.7
(22) Date of filing: 20.07.2004
(51) Int. Cl.: H01M 4/04, H01M 4/13, H01M 4/139, H01M 4/58, C01B 31/04

(54) **METHOD OF FABRICATION OF MODIFIED GRAPHITE GRANULES**
HERSTELLUNGSVERFAHREN VON MODIFIZIERTEN GRAPHIT-KÖRNER
PROCEDE DE FABRICATION DE GRANULES DE GRAPHITE MODIFIÉS

(30) Priority: 22.07.2003 CN 03132939; 16.08.2003 CN 03140199
(43) Date of publication of application: 03.05.2006
(73) Proprietor: Byd Company Limited, Shenzhen, Guangdong 518119 (CN)
(72) Inventor: ZOU, Caisong, Dormitory mail-stop, BYD Company Ltd, Shenzhen, Guangdong 518119 (CN); WANG, Chuanfu Dormitory mail-stop, BYD Company Ltd, Shenzhen, Guangdong 518119 (CN); DONG, Junqing Dormitory mail-stop, BYD Company Ltd, Shenzhen, Guangdong 518119 (CN)
(74) Representative: Vogel, Andreas
(86) International application number: PCT/CN2004/000834
(87) International publication number: WO 2005/008810

(56) References cited:
- EP-A- 0 917 228
- EP-A1- 0 782 207
- EP-A1- 0 847 098
- EP-A1- 1 265 307
- CN-A- 1 224 251
- CN-A- 1 237 003
- CN-A- 1 254 961
- CN-A- 1 339 838
- JP-A- 6 084 516
- JP-A- 2002 260 664
- US-A- 5 965 296
- US-A1- 2002 076 614
- US-B1- 6 524 748

## Description

### Field of Invention

This invention relates to modified graphite granules and their method of fabrication. In particular, it relates to modified graphite granules used as the active material in the negative electrode of a battery.

### Background

With the rapid development of the electronic, communications, and information technology industries, market demands for power sources of electronic products have increased. During this last decade, lithium ion rechargeable batteries have seen rapid development and widespread use as a result of their excellent overall electrical properties.

Since electronic products, especially portable electronic products, are gradually becoming more complex and miniaturized, the demand for power sources of these products is also increasing. These power sources now require sufficiently high energy density per unit weight or volume, excellent high current characteristics, and suitable cycle life and reliable safety properties. Among these, the demand for power sources with dense energy capacity per body mass and high current characteristics is especially high.

Electrical and electronic products such as modem portable products, electrical tools, electric bicycles, and electric cars can have very high demand for electrical consumption per unit time. Examples include modem cell phones with color screens and with functions such as wireless internet connections and multimedia capabilities, notebook computers demanding the ability to use electricity for a long time, and, the starter mechanism for automobiles. For the lithium ion rechargeable batteries that are used as the power sources, these products high currents from these power sources. In other words, for many circumstances in recent years, greater demands are made on the high current characteristics of the lithium ion rechargeable batteries.

The high current characteristics of lithium ion rechargeable batteries mainly depend on the material for their positive and negative electrodes. Among these, the active material for the negative electrode is especially critical for improving the high current characteristics that are mainly dependent on the electrical conducting properties and the stability of the structure of the underlying active material.

At present, the most common active material for the negative electrode in a lithium ion rechargeable battery is a graphite type material as graphite has a lower discharging electricity platform and better cycle stability characteristics. Among these graphite type materials, natural graphite with a high degree of graphitization has higher specific capacity. However, in the process of attaching and detaching lithium, the structure of the crystallite in the natural graphite can easily be loosened or even destroyed resulting in the deterioration of the cycle and high current characteristics.

Chinese Patent CN1230159, entitled "Graphite Granules and Using Graphite Granules as the Negative Electrode for Lithium Rechargeable Batteries," discloses a type of graphite granules. Lithium rechargeable batteries using those graphite granules have excellent rapid charge and discharge and cycle characteristics. The characteristics of this type of graphite granules are: lower directional property of the graphite granule resulting from the grouping or joining of many flat shaped granules together such that the directional position of the crystal surface of the neighboring flat shaped crystal granules are not parallel. The rate of attaching and detaching of the Li⁺ ion can then proceed more fully at a higher rate thereby obtaining a lithium rechargeable battery made from graphite with excellent high current characteristics. However, this method for fabricating graphite is actually is a type of man-made graphite treatment process that needs temperatures as high as 2800°C for the graphitization treatment resulting in high cost and difficult technology, thus making it difficult to implement for industrial production as well.

Due to the limitation of the prior art, it is therefore desirable to have novel forms of modified graphite granules with better electrochemical properties such that batteries with negative electrodes made with these modified graphite granules can have better performance characteristics. In addition, novel methods for the fabrication of such modified graphite granules are needed in order to produce said graphite granules in a low cost and simple manner.

### Summary of Invention

An object of this invention is to provide modified graphite granules that have excellent electrochemical properties; such that when for negative electrodes in batteries such as lithium ion rechargeable batteries, it produces batteries with high current characteristics, higher reversible specific capacity, and longer cycle life.

Another object of this invention is to provide a method for fabricating said modified graphite granules with technology that is simple, of low cost and easy for mass production.

The object is solved by a method for fabricating modified graphite granules, comprising the steps of:
preparing a surface modifying solution by mixing a pre-determined amount of a surface modifying agent in a corresponding solvent of said surface modifying agent;
immersing unmodified graphite granules in said surface modifying solution;
stirring said unmodified graphite granules in said surface modifying solution at 100 rpm to 2000 rpm for 0.5 hours to 10 hours to form coated graphite granules;
separating said coated graphite granules from said surface modifying solution;
heating to dry said coated graphite granules;
sifting said coated graphite granules;
solidifying said coated graphite granules in an inert environment at 200°C to 600°C for 0.2 hour to 12 hours, wherein the rate of increase in temperature in said solidifying step is 0.5°C/min to 35°C/min; and
carbonizing said solidified graphite in an inert environment at 750°C to 1300°C for 1 hour to 24 hours to form said modified graphite granules, wherein the rate of increase in temperature for said carbonizing step is 0.1 °C/min to 30°C/min.

Briefly, the present invention relates to a type of modified graphite granules and the method of fabrication of said modified graphite granules. Each granule of said modified graphite granules comprises of an unmodified graphite granule, and a membrane of amorphous carbon enveloping said unmodified graphite granules to form the outer membrane. The thickness of the amorphous carbon membrane is between 0.05µm and 1µm. The unmodified graphite granule can be a natural, man-made, or even a modified graphite granule. To fabricate said modified graphite granules, the unmodified graphite granules is immersed in a surface modifying solution that is near saturation and the solution is produced by mixing a pre-determined amount of a surface modifying agent in a corresponding solvent. The unmodified graphite granules are stirred in the surface modifying solution at the above mentioned predetermined speed for the above mentioned predetermined time period to form coated graphite granules. The coated graphite granules are then separated from the surface modifying solution, and heat to dry. The coated graphite granules are then sifted, and solidified in an inert environment at the above mentioned predetermined temperature for the above mentioned predetermined period of time. After solidification, said coated solidified graphite granules are carbonized in an inert environment at the above mentioned predetermined temperature for the above mentioned predetermined period of time to form the modified graphite granules.

The advantages of said modified graphite granules of the embodiments of this invention are: said modified graphite granules have excellent electrochemical properties, which, when used as the active material for the negative electrode in batteries (e.g. lithium ion batteries), produces batteries with excellent high current characteristics, higher reversible specific capacity, and longer cycle life that can satisfy the demands of practical application.

The advantages of said method for fabrication of said modified graphite granules of this invention is that the technology for the fabrication is simple and inexpensive, thus making it easy to use for commercial production.

### Description of Drawings

Figure 1 is the scanning electron micrograph of the unmodified graphite granules used in Embodiment 1.
Figure 2 is the scanning electron micrograph of the modified graphite granules made by of Embodiment 1.
Figure 3 is a graph of the result of the heat analysis (DSC - Differential Scanning Calorimetry and Thermal Gravimetric Analysis) of the modified graphite granules of Embodiment 1.

### Detailed Descriptions of the Preferred Embodiments

An embodiment of said modified graphite granules can by made as follows. Immerse the unmodified graphite granules in a surface modifying solution that is almost saturated by mixing a pre-determined amount of a surface modifying agent in a corresponding solvent of said surface modifying solution. The surface modifying agent is one or more polymers selected from the group: coal pitch, coal tar, petroleum pitch, petroleum coke, benzene, naphthalene, copolymers of benzene and naphthalene copolymer, petroleum wax and petroleum resin. The corresponding solvent for the surface modifying agent is an organic solvent selected from the following group: acetone, anhydrous ethanol, N-methyl pyrrolidone, chloroform, tetrahydrofuran, carbon tetrachloride, and cyclohexane. The average granule diameter of said unmodified graphite granules is between 7µm and 35µm. 1.5 liters to 3 liters of said surface modifying solution is used for every 1 kg of unmodified graphite granules. The unmodified graphite granules are stirred in said surface modifying solution at 100rpm to 2000 rpm for 0.5 hours to 10 hours to form coated graphite granules until the surface modifying solution is fully in contact with the surface of said unmodified core material of graphite granules. Then, the coated graphite granules are separated from the surface modifying solution, and heat to dry the excess surface correcting solution. The coated graphite granules is then sifted and solidified in an inert environment at 200°C to 600°C for 0.2 hours to 12 hours. During solidification, the temperature is increased at a rate of 0.5°C/min to 35°C/min. Lastly, said coated graphite is carbonized in an inert environment at 750°C to 1300°C for 1 hour to 24 hours to form said modified graphite granules. During carbonization, the rate of increase in temperature for carbonization is 0.1 °C/min to 30°C/min.

The unmodified graphite granules that form the core of said modified graphite granules can be natural, man-made graphite, or graphite modified by other means.

The specifications for one of the preferred embodiments of said fabrication method are:
Said solidification proceeds at 300 °C to 500°C where the temperature is held for 0.5 hours to 3 hours and the rate of increase in temperature is 5°C/min to 20°C/min.
Said carbonization proceeds at 800°C to 1200°C where the temperature is held for 2 hours to 10 hours and the rate of increase in temperature for said carbonization is 3°C/min to 20°C/min.

In said carbonization step, the rate of decrease in temperature is 5°C/min to 15°C/min.

This invention also discloses modified graphite granules where each modified graphite granule includes an unmodified graphite granule and a membrane of amorphous carbon enveloping said unmodified graphite granules forming the outer membrane. The thickness of said amorphous carbon membrane is between 0.05µm and 1µm.

In the embodiments of this invention, the crystallite interlayer spacing in said modified graphite granules, d₀₀₂, is between 0.335nm and 0.340nm. The specific surface area of said modified graphite granules is between 1.3 m²/g and 4.2 m²/g. The average granule diameter of the modified graphite granules is between 8 µm and 35µm.

Further preferable specifications of the embodiments for said modified graphite granules are: the crystallite interlayer spacing in said modified graphite granules, d₀₀₂, is between 0.335nm and 0.338nm. The specific surface area of said modified graphite granules is 1.8 m²/g and 3.5 m²/g and the average granule diameter of said modified graphite granules is between 10 µm and 20µm.

The average granule diameter is the D₅₀ measured by using a particle size analyzer. The crystallite interlayer spacing, d₀₀₂, is measured using an X-ray diffractometer. The specific area of the surface is obtained using the single-point BET method.

The amorphous carbon membrane that coats the surface of the core material of graphite granules can improve the surface morphology of the granule, lowering its specific surface area. When the modified graphite granules are used as active material for the negative electrode of lithium ion batteries, the modified surface morphology raises the compatibility between the granules and the electrical conducting solution in the battery, resulting in the improvement of the initial charge and discharge efficiency of the battery. The improve surface morphology can also compensate for the weakness of the boundary edges of the crystallite structure of the core material of unmodified graphite granules, lowering the directional characteristics of the crystallite, stabilizing the graphite crystallite, and further improving its electrical conduction and the uniformity of the electron distribution of the electrode. This results in raising the electrical mobility rate electrical migration rate of the Li⁺ s in the battery and increases the stability of the structure of the negative electrode during the process of charging and discharging and resulting in improving the high current characteristics.

In the embodiments of this invention, the average granule diameter of said modified graphite granules is between 8µm and 35µm. The preferred specification is between 10µm and 20µm. If the average granule diameter of the modified graphite granules is too small, then the modified graphite granules are too small and the specific surface area is too large. This can damage the reversibility discharge capacity in a battery with the negative electrode made from the modified graphite granules. If the average granule diameter is too large, then the distance between the modified graphite granule edge and the center is so large that the Li⁺ in the battery cannot fully attach and detach making the modified graphite granules not suitable as the active material for negative electrode of the lithium ion rechargeable battery.

In the embodiments of this invention, the crystallite interlayer spacing, d₀₀₂, is between 0.335nm and 0.340nm. The preferred size is between 0.335nm and 0.338nm. The crystallite interlayer spacing, d₀₀₂, of the graphite granules is mainly determined by the source of the unmodified graphite granules, i.e., whether said unmodified granules are made from natural graphite or man-made graphite with a high degree of graphitization. The surface modifying process does not greatly affect the crystallite layer interspacing, d₀₀₂. Usually, the nearer the crystallite interlayer spacing, d₀₀₂, is to the ideal graphite value of 0.3354nm, the higher the degree of graphitization. The higher the degree of graphitzation, the higher is the reversible specific capacity of a battery made with the modified graphite granules as the active material for its negative electrode. Therefore, in order to assure that the discharge capacity of the lithium ion rechargeable battery, natural or man-made graphite with a high degree of graphitzation should be used as the source for the unmodified graphite granules.

In the embodiments of this invention, the specific surface area of the modified graphite granules is between 1.3 m²/g and 4.2m²/g. A preferred specification is between 1.8 m²/g and 3.5m²/g. The modified graphite that has undergone the surface modifying treatment effectively decreases the specific surface area of the unmodified graphite granules. (The specific surface area of the source for the unmodified graphite granules is approximately 5m²/g.). The size of the specific surface area of the material for the negative electrode directly affects the amount of the irreversible capacity used by the SEI membrane that is formed during the initial charging process in a lithium ion battery. This directly affects the initial charge and discharge efficiency and the size of the reversible specific capacity of the battery. Therefore, in order to assure the highest reversible specific capacity in a battery, it is better to fabricate the negative electrode from a material that has as small a specific surface area as possible.

The thickness of the membrane of said amorphous carbon is between 0.05µm and 1µm. The thickness of the membrane of said amorphous carbon is calculated according to the volume of coating of the surface modifying agent on the surface of the graphite core material granules and the average diameter of the core material of graphite granules, the DSC (Differential Scanning Calorimetry and Thermal Gravimetric Analysis) graph of the modified graphite granules can be obtained by heat analysis.

In another embodiment of this invention, the modified graphite granules are obtained by treating and modifying the surfaces of natural or man-made graphite granules with high graphitization levels. The fabrication method is as follows: Immerse unmodified graphite granules in a polymer surface modifying solution that is saturated or almost saturated and prepared by dissolving a polymer surface modifying agent in its corresponding organic solvent; Stir at a speed of 100rpm to 2000rpm for 0.5 hours to 10 hours such that the surface modifying solution is fully in contact with the surface of said unmodified graphite granules to from coated graphite granules; Separate the coated graphite granules by filtering or centrifuge; Heat to dry excess surface modifying solution; Sift; Solidify and also carbonize the dried coated graphite granules in an inert environment. A crushing process is not needed to obtain the modified graphite granules in the embodiments of this invention.

In the embodiments of the fabrication method of this modified graphite granules, said surface modifying agent is a type of organic matter with high carbon content. It is one or more polymers selected from the following group: coal pitch, coal tar, petroleum pitch, petroleum coke, benzene, naphthalene, copolymers of benzene and naphthalene, petroleum wax, and petroleum resin. The corresponding solvent is an organic solvent selected from the following group: acetone, anhydrous ethanol, N- methyl pyrrolidone, chloroform, tetrahydrofuran, carbon tetrachloride, and cyclohexane.

In the fabrication method of said modified graphite granules of the embodiments of said invention, the effect of the surface modification is related to the stirring time in above described stirring step. If the stirring time is too long, the thickness of the organic membrane that is adhering to the surface of the core material of unmodified graphite granules is too thick and will affect the properties of the modified graphite granules such as lowering the initial charge/discharge efficiency the battery whose negative electrode is made from the modified graphite granules. If the stirring time is too short, then the membrane of organic material membrane adhering to the surface of the core material of unmodified graphite granule is too thin and not uniformly distributed on the surface of the core material of unmodified graphite granules thus affecting the properties of the modified graphite granules.

In the solidifying step of the fabrication method of the modified graphite granules of the embodiments of this invention, increase the temperature at the rate of 0.5°C/min to3 5°C/min to reach the desired temperature for solidification. A better range is 5°C/min to 20°C/min. The solidification temperature is 200°C to 600°C. A better range is 300°C to 500°C. Hold the temperature for 0.2 hours to 12 hours. A better time is 0.5 hours to 3 hours. After solidification, increase the temperature at a rate of 0.1 °C/min to 30°C/min to reach the desired temperature for carbonization. A better rate of increase is 3°C/min to 20°C/min. The carbonization temperature is 750°C to 1300°C. A better range is 800°C to 1200°C. Hold the temperature for 1 to 24 hours. A better time is 2 hours to 10 hours. After carbonization, lower the temperature at the rate of 1°C/min to 20°C/min. A better decrease rate is 5°C/min to 15°C/min. The temperature can also be lowered naturally.

If the carbonization temperature is too low, such as lower than 750°C, then the carbonization of the organic layer on the surface of the core material of unmodified graphite granule is insufficient to form a stable compact carbon membrane and minute pores may even be formed. A structure with minute holes and larger specific surface area may even be formed. This kind of structure does not improve the surface morphology. If the carbonization temperature is too high, such as higher than the 1200°C, there is no apparent improvement in the results. However, the energy usage is increased making this method uneconomical. The time for holding the temperature should not be too short or the carbonization will be insufficient to form a stable carbon membrane. If the temperature is held too long, then energy usage is increased and the method becomes uneconomical.

In the fabrication method of the modified graphite granules of the embodiments of said invention, furnaces such as: box-style electrical resistance furnace, tubular furnace, push pull tunnel furnace, or rotating tunnel furnace can be used for solidification and carbonization as long as the furnace can reach desired temperature, can be sealed and is able to aerate the inert environment. Said inert environment can be a mixture of one or more of the following: argon gas, helium gas, and nitrogen gas.

The embodiments discussed below provide further details about this invention. To test the electrochemical properties of the modified graphite granules made by the embodiments discussed below, the modified graphite granules is made into the active ingredient of the negative electrode of lithium ion rechargeable batteries and the performances of these batteries are tested against batteries with negative electrodes made from the unmodified graphite granules of two comparison examples discussed below.

To make the negative electrodes from the modified or modified graphite granules in the embodiments and comparison examples discussed below, add binder and de-ionized water to said modified or unmodified graphite granule. Stir the resultant mixture, then coat, heat to dry and compress to form the negative electrode plate.

To make lithium ion rechargeable batteries with existing battery technology using the negative electrodes made as described above, use LiCoO₂ as the active material for the positive electrode, corresponding conducting agent, binder, and LiPF₆ as the electrolyte salt. The solvent for the electrolyte solution is a mixture of the following organic solvent: ethylene carbonate, ethyl methyl carbonate, diethyl carbonate. The concentration is 1 mole per liter. The separator is polyethylene and polypropylene multiple separator.

### Embodiment 1

The following steps comprise the method for the fabrication of Embodiment 1:
Dissolve 8 g of petroleum coke in carbon tetrachloride to formulate 200 ml of 4% surface modifying solution;
Immerse 100g of unmodified dried natural graphite granules and immerse in the surface modifying agent organic solution;
Stir at 300rpm speed for 1 hour to form a thin layer of surface modifying membrane on the surface of the unmodified graphite granules;
Filter the coated graphite granules that are obtained; Heat to dry and sift with 300 mesh;
Put sifted coated graphite granules into sealed tubular high temperature furnace. Pass highly pure nitrogen at 10 liters/min of flow volume and increase the temperature at 15°C/min to 400°C and hold the temperature for 1 hour; and
Increase the temperature at 10°C/min to 1000°C and hold the temperature for 3 hours. Lower the temperature naturally to room temperature to obtain the modified graphite granules with surface modification.

Using D₅₀, the average granule diameter of said modified graphite granules of Embodiment is shown to be 13.8µm. Its crystallite interlayer spacing, d₀₀₂, is 0.3365nm, and its specific surface area is 2.8m²/g.

### Embodiment 2

In this embodiment, the surface modifying solution is a 5% coal pitch in tetrahydrofuran. Other than this, all other steps and specifications are the same as Embodiment 1. The modified graphite granule obtained from this embodiment has fundamentally the same average granule diameter D₅₀ and crystallite interlayer spacing, d₀₀₂. as the modified graphite granules of Embodiment 1.

### Embodiment 3

In this embodiment, the surface modifying solution is a 3% petroleum pitch and chloroform solution. Other than this all other steps and specifications are the same as Embodiment 1. The modified graphite granules obtained from this embodiment has fundamentally the same average granule diameter Dso and crystallite interlayer spacing, d₀₀₂, as the modified graphite granules of Embodiment 1.

### Embodiment 4

This Embodiment uses a carbonization temperature of 800°C. Other than this, all other steps and specifications are the same as Embodiment 1. The modified graphite granules obtained from this embodiment has fundamentally the same average granule diameter D₅₀ and crystallite interlayer spacing, d₀₀₂, as the modified graphite granules in Embodiment 1.

### Embodiment 5

This Embodiment uses a carbonization temperature of 1200°C. Other than this, all other steps and specifications are the same as Embodiment 1. The modified graphite granules obtained from this embodiment has fundamentally the same average granule diameter D₅₀ and crystallite interlayer spacing, d₀₀₂, as the modified graphite granules in Embodiment 1.

### Embodiment 6

This Embodiment uses natural graphite with smaller average granule diameter as the unmodified graphite granules. Other than this, all other steps and specifications are the same as Embodiment 1. The modified graphite granules obtained from this Embodiment has an average granule diameter D₅₀ of 8.2µm and its crystallite interlayer spacing, d₀₀₂, is fundamentally the same as the modified graphite granules in Embodiment 1.

### Embodiment 7

This Embodiment uses natural graphite with larger average granule diameter as the unmodified graphite granules. Other than this, all other steps and specifications are the same as Embodiment 1. The modified graphite granules obtained from this Embodiment has an average granule diameter D₅₀ of 35.0µm and its crystallite interlayer spacing, d₀₀₂, is fundamentally the same as the modified graphite granules in Embodiment 1

In order to investigate the electrochemical properties of the embodiments of said invention in Embodiments 1 though 7, the properties of batteries whose negative electrodes are made from above described embodiments are compared with the properties of batteries whose negative electrodes are made from graphite granules that has not undergone the improvement described in the embodiments of this invention. The examples of unmodified graphite granules that are used for comparison includes the following:

### Comparison Example 1

Directly use the natural graphite granules of Embodiment 1 as the active material for the negative electrode to make battery. Other than that, all other steps and processes for fabricating the lithium ion battery remains the same as Embodiment 1.

### Comparison Example 2

This Embodiment uses a carbonization temperature of 700°C, holding the temperature for 5 hours. Therefore, the graphite granules in this comparison example are modified but are not improved. Other than that, all other steps and specifications remains the same as Embodiment 1.

The following operating characteristics of the batteries made from the Embodiments 1 through 7 and Comparison Examples 1 and 2 are measured and compared:
For high current characteristics, C_{3C}/C₀._{5C}, the ratio of discharging capacity using 3C of current to discharge from 4.2V to 3.0V and from 0.5C of current from 4.2V to 3.0V;
For high current characteristics, C_{2C}/C₀._{5C}, the ratio of discharging capacity using 2C of current to discharge from 4.2V to 3.0V and from 0.5C of current from 4.2V to 3.0V.

Reversible specific capacity, the discharge capacity of the initial discharge of from 0.1C of current from 4.2V to 3.0 V after it had been initially charged with 0.1C of current to 4.2V)/the weight of the active material of the negative electrode; and
Cycle life; a cycle is the process of using 1C of electricity to charge to 4.2V and then to discharge the electricity to 3.0V. For each cycle, the discharge capacity is the capacity of that cycle. In the measuring of electrochemical properties of the embodiments of this invention, the cycle life is the number of cycles its takes for the discharge capacity of that cycle to reach 80% of the discharge capacity of the initial cycle.

The methodology for obtaining the electrochemical properties of the modified graphite granules in Embodiments 1 to 7 and Comparison Examples 1 and 2 are as follows:
The specific surface area is obtained using the single-point BET method.

The conditions for heat analysis testing are:
Instrument model and number of instrument used are: NETSCH STA 449C
The method used is the Differential Scanning Calorimetry and Thermal Gravimetric analysis, that is, DSC-TG
The weight of the sample of unmodified graphite granules is 6.824mg
The crucible material is: Al₂O₃
The furnace environment is gas with flow speed of 25Nml/min

The temperature of the furnace environment is to start from toom temperature and increase the temperature at 10°C/min to 1000°C.

The results of the testing of the above described electrochemical characteristics are shown in the following table:

| Number | Specific Surface Area m²/g | High Current Characteristics | | Reversible Specific Capacity mAh/g | Cycle Life Span |
|---|---|---|---|---|---|
| | | C_{3C}/C_{0.5C} | C_{2C}/C_{0.5C} | | |
| Embodiment 1 | 1.8 | 86.2 | 96.4 | 340 | 280 |
| Embodiment 2 | 2.8 | 86.1 | 96.9 | 351 | 312 |
| Embodiment 3 | 2.6 | 82.6 | 96.4 | 338 | 264 |
| Embodiment 4 | 3.5 | 80.5 | 95.8 | 330 | 320 |
| Embodiment 5 | 2.3 | 88.4 | 96.7 | 350 | 277 |
| Embodiment 6 | 4.2 | 82.8 | 95.1 | 332 | 320 |
| Embodiment 7 | 1.5 | 80.2 | 94.6 | 340 | 245 |
| Comparison Example 1 | 5.7 | 57.4 | 88.1 | 337 | 76 |
| Comparison Example 2 | 4.8 | 72.2 | 94.5 | 332 | 253 |

The above table shows that the specific surface area of the modified graphite granules from Embodiments 1 to 7 is smaller that those of Comparison Examples 1 to 2. The batteries made from Embodiment 1 through 7 has excellent high current characteristics, higher reversible specific capacity and longer cycle life.

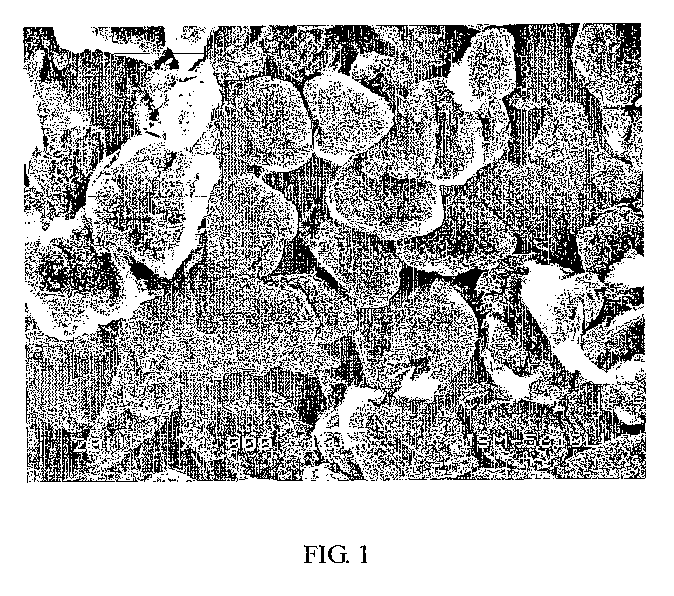

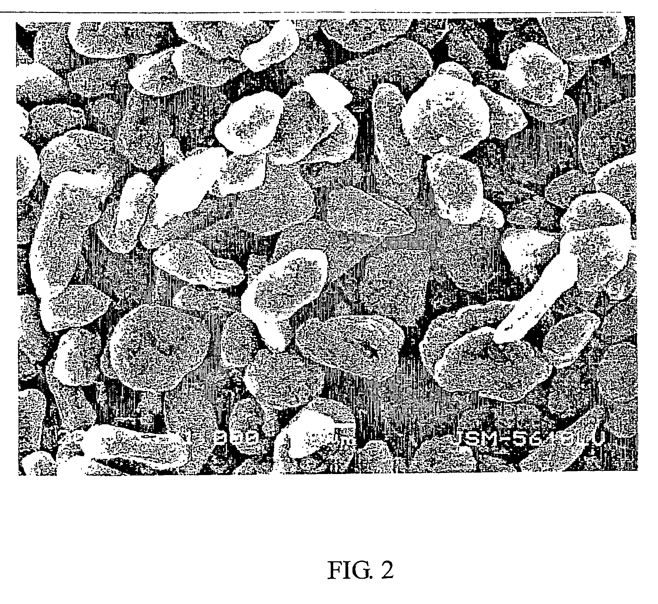

With respect to the drawings, Figure 1 is the scanning electron micrograph of the unmodified graphite granules used in Embodiment 1. Figure 2 is the scanning electron micrograph of the modified graphite granules made by of Embodiment 1. The micrographs of Figures 1 and 2 are made using the equipment from JOEL equipment with model number JSM-5160. The micrograph shows that the shape of the modified graphite granules is potato shaped or spherical shaped.

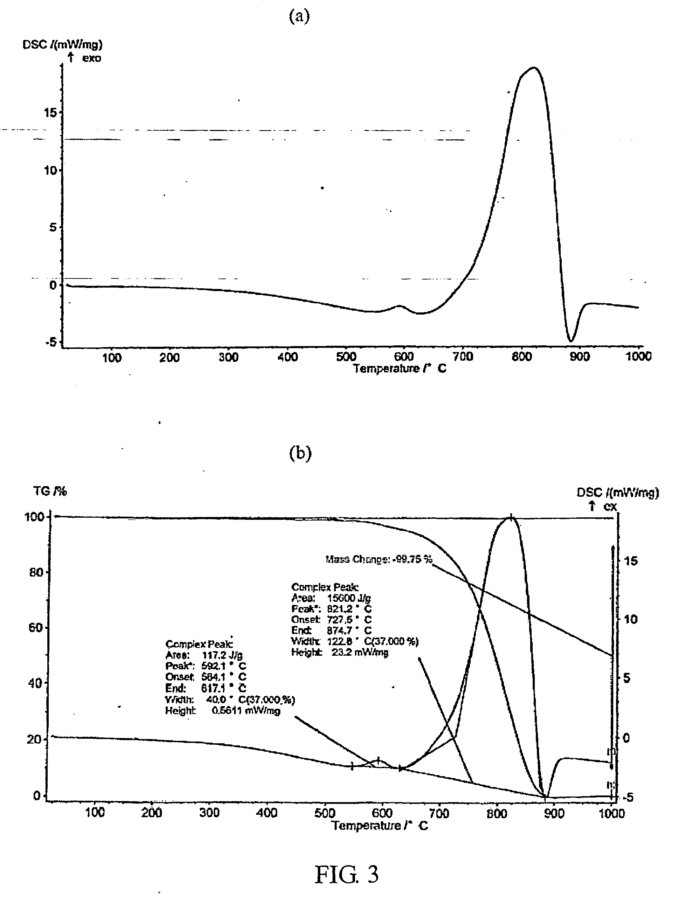

Figure 3 is the result of the heat analysis (DSC - Differential Scanning Calorimetry and Thermal Gravimetric Analysis) of the modified graphite granules in Embodiment 1. The peak corresponding to 592.1°C is the amorphous carbon membrane. The peak corresponding to 821.2°C is the unmodified graphite granules core material. Under customary conditions, the peak corresponding to 500°C to 650°C should be the amorphous carbon membrane. The peak corresponding to 750°C to 850°C should be the graphite granules core material.

The detailed data relating to the complex peak of the unmodified graphite granules core material are listed below:

| | |
|---|---|
| Area: | 15600J/g |
| Peak: | 821.2°C |
| Onset: | 727.5°C |
| End: | 874.7°C |
| Width: | 122.8°C (37.000%) |
| Height: | 23.2mW/mg. |

The detailed data relating to the complex peak of the amorphous carbon membrane are listed below:

| | |
|---|---|
| Area: | 117.2 J/g |
| Peak: | 592.1°C |
| Onset: | 564.1°C |
| End: | 617.1°C |
| Width: | 40.0°C (37.000%) |
| Height: | 0.5611 mW/mg. |

The modified graphite granules in the embodiments of this invention have excellent high current characteristics with great practical potential and superiority in conditions that require a high demand for rapid charging and discharging. Such active material for the negative electrode retains higher reversible specific capacity, and possesses longer cycle life, is stable and reliable and can satisfy the demands of practical applications. The fabrication method of this modified graphite granules in the embodiments of this invention has simple technology, is low cost, and easy for industrial production.

While the present invention has been described with reference to certain preferred embodiments, it is to be understood that the present invention is not limited to such specific embodiments. Rather, it is the inventor's contention that the invention be understood and construed in its broadest meaning as reflected by the following claims. Thus, these claims are to be understood as incorporating and not only the preferred embodiments described herein but all those other and further alterations and modifications as would be apparent to those of ordinary skilled in the art.

## Claims

1. A method for fabricating modified graphite granules, comprising the steps of:
preparing a surface modifying solution by mixing a pre-determined amount of a surface modifying agent in a corresponding solvent of said surface modifying agent;
immersing unmodified graphite granules in said surface modifying solution;
stirring said unmodified graphite granules in said surface modifying solution at 100 rpm to 2000 rpm for 0.5 hours to 10 hours to form coated graphite granules;
separating said coated graphite granules from said surface modifying solution;
heating to dry said coated graphite granules;
sifting said coated graphite granules;
solidifying said coated graphite granules in an inert environment at 200°C to 600°C for 0.2 hour to 12 hours, wherein the rate of increase in temperature in said solidifying step is 0.5°C/min to 35°C/min; and
carbonizing said solidified graphite in an inert environment at 750°C to 1300°C for 1 hour to 24 hours to form said modified graphite granules, wherein the rate of increase in temperature for said carbonizing step is 0.1 °C/min to 30°C/min.

2. The method of claim 1 wherein the average granule diameter of said unmodified graphite granules is between 7µm and 35µm.

3. The method of claim 1 wherein 1.5 liters to 3 liters of said surface modifying solution is used for every 1 kg of said unmodified graphite granules.

4. The method of claim 1 wherein said surface modifying agent is one or more polymers selected from the group consisting of: coal pitch, coal tar, petroleum pitch, petroleum coke, benzene, naphthalene, copolymers of benzene and naphthalene copolymer, petroleum wax and petroleum resin.

5. The method of claim 1 wherein said corresponding solvent is an organic solvent selected from the group consisting of acetone, anhydrous ethanol, N-methyl pyrrolidone, chloroform, tetrahydrofuran, carbon tetrachloride, and cyclohexane.

6. The method of claim 1 wherein the average granule diameter of said unmodified graphite granules is between 7µm and 35µm, and 1.5 liters to 3 liters of said surface modifying solution is used for every 1 kg of said unmodified graphite granules.

## Patentansprüche

1. Ein Verfahren zur Herstellung von modifiziertem Graphltgranulat, umfassend die Verfahrensschritte:
Herstellen einer Oberflächen-modifizierenden Lösung durch Vermischen einer vorbestimmten Menge eines Oberflächen modifizierenden Mittels in einem entsprechenden Lösungsmittel dieses Oberflächen-modifizierenden Mittels;
Eintauchen von unmodifiziertem Graphltgranulat in besagter Oberflächen modifizierenden Lösung;
Verrühren des genannten unmodifizierten Graphitgranulats in besagter Oberflächen modifizierenden Lösung mit 100 rpm bis 2000 rpm für 0,5 Std. bis 10 Std. um beschichtetes Graphitgranulat herzustellen;
Separieren des genannten beschichteten Graphitgranulates von der besagten Oberflächen-modifizierenden Lösung;
Erhitzen zur Trocknung des beschichtetes Graphitgranulats;
Durchsieben des genannten beschichteten Graphitgranuletes;
Erhärten des besagten beschichteten Graphitgranulates In einer Inerten Umgebung bei 200°C bis 600°C für 0,2 Std. bis 12 Std., wobei eine Temperaturerhöhung während des Erhärtens von 0,5°C/min bis 35°C/min durchgeführt wird; und
Karbonisieren des genannten beschichteten Graphitgranulates in einer inerten Umgebung bei 750°C bis 1300°C für 1 Std. bis 24 Std. um besagtes Graphitgranulat herzustellen, wobei eine Temperaturerhöhung während des Karbonisierens von 0,1°C/min bis 30°C/min durchgeführt wird.

2. Verfahren nach Anspruch 1, wobei der durchschnittliche Durchmesser des Granulates von dem genannten unmodifizierten Graphitgranulates zwischen 7 µm und 35 µm liegt.

3. Verfahren nach Anspruch 1, wobei 1,5 Liter bis 3 Liter der besagten Oberflächen-modifizierenden Lösung pro 1 kg des genannten unmodifizierten Graphitgranulats eingesetzt wird.

4. Verfahren nach Anspruch 1, wobei die besagte Oberflächen modifizierenden Lösung aus einem oder mehreren ausgewählten Polymere ist, bestehend aus einer Gruppe mit: Pechkohle, Kohlenteer, Petrolpech, Petrolkoks, Benzol, Naphthalin, Benzol-Copolymer und Naphthalin-Copolymer, Petroleumparaffin, Petroleumharz.

5. Verfahren nach Anspruch 1, wobei besagte entsprechende Lösungsmittel ein organisches Lösungsmittel ist, bestehend aus einer Gruppe mit: Azeton, anhydrisches Ethanol, N.Methyl Pyrrolidon, Chloroform, Tetrahydrofuran, Kohlenstofftetrachlorid, Cyclohexan.

6. Verfahren nach Anspruch 1, wobei der durchschnittliche Durchmesser des Granulates des besagten unmodifizierten Graphitgranulats zwischen 7 µm und 35 µm liegt, und 1,5 Liter bis 3 Liter des besagten Oberflächen-modifizierenden Lösung für 1 kg des genannten unmodifizierten Graphitgranulats benutzt werden.

## Revendications

1. Procédé de fabrication de granules de graphite modifiés, comprenant les étapes consistant à :
préparer une solution de modification de surface en mélangeant une quantité prédéterminée d'un agent de modification de surface dans un solvant correspondant dudit agent de modification de surface ;
Immerger des granules de graphite non modifiés dans ladite solution de modification de surface ;
mélanger par agitation lesdits granules de graphique non modifiés dans ladite solution de modification de surface à une vitesse comprise entre 100 tours/min et 2 000 tours/min pendant une durée comprise entre 0,5 heure et 10 heures afin de former des granules de graphite revêtus ;
séparer lesdits granules de graphite revêtus de ladite solution de modification de surface ;
chauffer lesdits granules de graphite revêtus pour les sécher ;
tamiser lesdits granules de graphite revêtus ;
solidifier lesdits granules de graphite revêtus dans un environnement inerte à une température comprise entre 200 °C et 600 °C pendant une durée comprise entre 0,2 heure et 12 heures, le taux d'augmentation de température lors de ladite étape de solidification étant compris entre 0,5 °C/min et 35 °C/min ; et
effectuer une carbonisation dudit graphite solidifié dans un environnement inerte à une température comprise entre 750 °C et 1 300 °C pendant une durée comprise entre 1 heure et 24 heures afin de former lesdits granules de graphite modifiés, où le taux d'augmentation de température pendant ladite étape de carbonisation va de 0,1 °C/min à 30 °C/min.

2. Procédé selon la revendication 1, dans lequel le diamètre de granules moyen desdits granules de graphite non modifiés est compris entre 7 µm et 35 µm.

3. Procédé selon la revendication 1, dans lequel la quantité de ladite solution de modification de surface utilisée par 1 kg desdits granules de graphite non modifiés est comprise entre 9,5 litre et 3 litres.

4. Procédé selon la revendication 1, dans lequel ledit agent de modification de surface est un ou plusieurs polymères sélectlonnés à partir du groupe constitué :
de bral de houille, de goudron de houille, de brai de pétrole, de coke de pétrole, de benzène, de naphtalène, de copolymères de benzène et de copolymère de naphtalène, de paraffine de pétrole et de résine de pétrole.

5. Procédé selon la revendication 1, dans lequel ledit solvant correspondant est un solvant organique sélectionné à partir du groupe constitué : d'acétone, d'éthanol anhydre, de N-méthylpyrrolidone, de chloroforme, de tétrahydrofurane, de tétrachlorure de carbone, et de cyclohexane.

6. Procédé selon la revendication 1, dans lequel le diamètre de granules moyen desdits granules de graphite non modlflés est compris entre 7 µm et 36 µm, et la quantité de ladite solution de modification de surface utilisée par 1 kg desdits granules de graphite non modifiés est comprise entre 1,5 litre et 3 litres.
